# EUROPEAN PATENT SPECIFICATION

(11) **EP 2 106 054 B1**
(45) Date of publication and mention of the grant of the patent: **19.05.2010**
(21) Application number: 08290314.7
(22) Date of filing: 28.03.2008
(51) Int. Cl.: H04J 3/16, H04J 7/00, H04L 5/04

(54) **Upgrading of a passive optical network**
Aufrüstung eines passiven optischen Netzwerks
Mise à niveau d'un réseau optique passif

(43) Date of publication of application: 30.09.2009
(73) Proprietor: Alcatel Lucent, 75008 Paris (FR)
(72) Inventor: Krimmel, Heinz-Georg, 70825 Korntal-Münchingen (DE)
(74) Representative: Schmidt, Werner Karl

(56) References cited:
- EP-A- 0 339 641
- US-A1- 2007 171 943
- HSUEH Y-L ET AL: "Smooth Upgrade of Existing Passive Optical Networks With Spectral-Shaping Line-Coding Service Overlay" JOURNAL OF LIGHTWAVE TECHNOLOGY, IEEE SERVICE CENTER, NEW YORK, NY, US, vol. 23, no. 9, 1 September 2005 (2005-09-01), pages 2629-2637, XP011138999 ISSN: 0733-8724

## Description

### Background of the Invention

The invention relates to an upgrading unit for operating a passive optical network, PON, at a higher speed, and to a PON comprising such an upgrading unit. The invention also relates to a method for operating a passive optical network at a higher speed.

Passive optical networks are optical access networks for exchanging signals between a central station, commonly referred to as Optical Line Termination (OLT) and a plurality of subscriber stations, usually referred to as Optical Network Terminations (ONTs) or Optical Network Units (ONUs). Upgrading such an access network by increasing the speed of the downstream transmission from the OLT to the ONTs from a first bit-rate (e.g. 2.5 Gbit/s) to a higher bit-rate (e.g. 10 Gbit/s) is rather difficult, the reason being as follows: Although the network operator can easily replace a legacy OLT which is not capable of performing downstream transmission at the higher bit rate by an advanced OLT, not all of the legacy ONTs which cannot process signals with the higher bit rate can be replaced at the same time due to economical reasons, as several tens to hundreds of ONTs may be connected to the same OLT.

Thus, a considerable number of legacy ONTs may be present together with some updated or advanced ONTs in a PON after such a network upgrade. Consequently, the downstream transmission from the OLT must be adapted to transmit downstream signals which can be received and processed by both the legacy ONTs and the advanced ONTs. This can be achieved either by dividing the downstream transmission time into first time intervals during which data is transmitted at the high bit rate, the first time intervals alternating with second time intervals which are reserved for the transmission of data at the lower bit rate, or by transmitting data both at the high and the low bit rate concurrently. In any case, as signals of two different signal speeds are present in such a PON, the latter is referred to as a multi-mode PON, more particularly as a dual-mode PON.

Throughout the present application, the speed of the discrete-level signals refers to the speed at which transitions between these discrete levels occur. In case that the discrete-level signals are binary signals, i.e. signals with only two discrete levels, the speed of the signal corresponds to the bit rate. When more than two discrete levels are provided in the signal, more than one bit may be transmitted between subsequent transitions, so that the bit rate may be larger than the signal speed, the signal speed corresponding to the symbol rate in this case.

In a multi-mode PON, the legacy ONTs are usually not capable to recover the clock from the binary signal transmitted with the higher bit rate. Consequently, the OLT must provide downstream signals which allow the legacy ONTs to perform their clock recovery even during time intervals when only data at the higher bit rate is transmitted. One advantageous way to generate such a downstream signal is to use a so-called bit-stacked signal which is generated by superimposing (combining) the amplitude of two discrete-level signals, in particular binary signals, one with the lower and the other with the higher symbol-rate, the phase of both signals being aligned, preferably being identical.

For generating such a bit-stacked signal, a straightforward solution is to generate both discrete-level signals (for the legacy and advanced ONTs) in a joint OLT which replaces the legacy OLT. However, it may be advantageous to keep the legacy OLT and to realize the advanced functions only for the higher symbol rate system, in particular as the service interruption time during an upgrade should to be kept as low as possible.

The article of Yu-Li Hsueh et al. "Smooth Upgrade of Existing Passive Optical Networks With Spectral Shaping Line-Coding Service Overlay", Journal of Lightwave Technology, IEEE Service Center, NY, vol. 23, no. 9, pp. 2629 to 2637, describes upgrading of an existing PON by using a hierarchical coding procedure for achieving desired long-term spectral properties. Different code rates are supported and an optimal line code which maximizes data throughput may be determined.

US 2007/0171943 A1 discloses a method for upgrading the network rate of a PON which includes: Upgrading the optical fiber line rate of the OLT, and adapting, by the ONT, the working rate of the upstream/downstream line automatically to the optical fiber line rate of the OLT according to a downstream data flow transmitted from the OLT.

EP 0 339 641 A discloses a method and device for adding and separating a low-rate digital channel to the high-rate digital channel of a transmission link. According to this method, on transmission, the signal from a low-rate digital channel is added to that from a high-rate digital channel by over-modulation or superposition means which generate a composite transmission signal. On reception, the signal from the high-rate digital channel is recovered thanks to regeneration means operating on the composite transmission signal. The signal from the low-rate digital transmission channel is recovered thanks to means for subtracting the composite transmission signal, previously filtered by a first low-pass filter, and the regenerated signal from the high-rate digital channel, previously filtered by a second low-pass filter.

### Object of the Invention

It is the object of the invention to provide: an upgrading unit, a PON, and a method for operating a PON at a higher speed, all of which allow operating a PON as a multi-mode system without having to replace an existing OLT.

### Summary of the Invention

This object is achieved by an upgrading unit for operating a passive optical network, PON, at a higher speed by inserting the upgrading unit as an in-line element into a fiber line of the PON, the upgrading unit comprising: a receiver for receiving a first discrete-level signal having a first speed and being provided to an optical input of the upgrading unit, a bit-stacking unit for synchronously combining the first discrete-level signal and a second discrete-level signal having a second, higher speed to form a multi-speed, multi-level signal in the electrical domain, and a transmitter for providing the multi-speed, multi-level signal to an optical output of the upgrading unit.

By arranging the upgrading unit at an adequate location in the PON, for example in the main line of the PON, i.e. between the legacy OLT and the first splitter, the introduction of a new central network element can be covered in a manner that leaves the existing OLT in place and minimizes upgrade-induced service-interruption time. In the upgrading unit, basically a repeater is introduced for the legacy downstream signal (first discrete-level signal) received from the legacy OLT, and a synchronization of the second discrete-level signal (in the following also referred to as advanced system) is performed with the first bit-rate signal (legacy system) for combining the first and second discrete-level signals to form the bit-stacked signal. The bit-stacking is performed in the electrical domain e.g. by adding up the voltage levels of the first and second discrete-level signal or by using a look-up table instead in order to reduce the noise which may be introduced by the addition. In any case, the bit-stacked signal is finally re-emitted within the same wavelength range with a high-speed optical source to the main optical fiber line.

In a highly preferred embodiment, the upgrading unit further comprises: a clock recovery unit for recovering the clock of the first discrete-level signal, a clock generator for generating the clock of the second discrete-level signal, and a synchronizing unit for synchronizing the clock generator for the second discrete-level signal to the clock of the first discrete-level signal. The synchronization of the two signals may be performed e.g. by using a phase-locked loop (PLL). In such a way, the legacy system may serve as a master clock system and the advanced system may serve as a slave clock system.

In another preferred embodiment, the upgrading unit further comprises: two wavelength-selective couplers for splitting a signal path between the input and the output of the upgrading unit into an upstream signal path and a downstream signal path, the optical receiver, the bit-stacking unit, and the optical transmitter being arranged in the downstream signal path. The upstream signaling and the downstream signaling of the PON may not be performed on the same wavelength, such that the downstream signals and the upstream signals may be separated in the upgrading unit by using two wavelength-selective couplers (e.g. multiplexers). Thus, the system can be made optically transparent in the upstream direction to close the loop of the MAC for the legacy system, such that the legacy OLT may still control the upstream multiple access.

In a highly preferred embodiment, the upgrading unit further comprises: a signal generation unit for generating the second discrete-level signal, the signal generation unit being preferably connected to a network interface for receiving data to be included into the second discrete-level signal. Typically, the data received from the network interface is payload data and the signal generation unit encapsulates the payload data to form a downstream transmission frame. The signal generation unit may also comprise a buffer for buffering payload data or downstream transmission frames before their transmission as a second discrete-level signal, in synchronism with the first discrete-level signal. The signal generation unit may also be adapted to encode binary data received from the network interface as symbols, i.e. as signals having more than two discrete levels for the purpose of increasing the transmission speed.

In a preferred embodiment, the upgrading unit further comprises a data retrieving unit for retrieving an upstream bandwidth map from the first discrete-level signal, the signal generation unit being adapted to generate an upstream bandwidth map for the second discrete-level signal taking the upstream bandwidth map of the first discrete-level signal into account, preferably by interleaving time slots for upstream grants of the second discrete-level signal with time slots for upstream grants of the first discrete-level signal. The downstream signal of the legacy OLT typically comprises downstream frames with an upstream bandwidth map for coordinating the data sent in upstream through the PON by allocating upstream grants for sending upstream traffic in specific time slots to the OLTs. By reading the upstream bandwidth map from the downstream signal, the upstream transmission grant allocation can be easily copied to the advanced speed system if two maps are maintained and concurrent upstream signaling on the legacy wavelength or several advanced wavelengths can be interleaved in time, i.e. time slots in which no upstream grants are allocated to the legacy ONTs may be used for the upstream transmission of the advanced OLTs.

In yet another preferred embodiment, the upgrading unit further comprises a tap coupler in the upstream signal path for retrieving burst envelope information from upstream signals in transit through the upgrading unit. Such an optical tap may snoop the upstream bandwidth traffic occupation and compare it to the known bandwidth map to gain insight into actual round trip delays from the upgrading unit to the advanced ONTs and back, the knowledge of the round trip delays being used for the network management.

In another preferred embodiment, the upstream signal path comprises: a receiver for receiving upstream signals at a first and at a second, higher speed from the optical output, a data retrieving unit for retrieving data from the upstream signals, and a transmitter for transmitting upstream signals having the first speed to the optical input. In such a way, the upgrading unit may control both the downstream and upstream traffic transmitted to and from the advanced ONTs, while the upstream signals from the legacy ONTs are provided to the OLT which may still control their upstream multiple access. Alternatively, the upstream signals of the advanced ONTs and the upstream signals of the legacy ONTs may be transmitted on different wavelengths, the upstream signals of the advanced ONTs being terminated in the upgrading unit in this case.

A second aspect of the invention is implemented in a passive optical network, PON, comprising: an optical line termination, OLT, being adapted to generate a first discrete-level optical signal, a main line arranged between the OLT and an optical splitter, a plurality of branches connected to the optical splitter, and at least one upgrading unit as described above, arranged as an in-line element in the main line or in one of the branches. Due to the tree-like structure of the PON with the OLT at the head end, all the traffic between the OLT and the ONTs passes through the main line, the main line being therefore ideally suited for the insertion of the upgrading unit. Nevertheless, it may be advisable to arrange the upgrading unit in one of the branches of the point-to-multipoint PON, in case that only an upgrade of a specific part of the PON is desired.

A third aspect of the invention is implemented in a method for operating a passive optical network, PON, at a higher speed, the method comprising: inserting an upgrading unit as an in-line element into a fiber line of the PON, receiving a first discrete-level optical signal having a first speed from an optical input of the upgrading unit, synchronously combining the first discrete-level signal and a second discrete-level signal having a second, higher speed to form a multi-speed, multi-level signal in the electrical domain, and transmitting the multi-speed, multi-level signal to an optical output of the upgrading unit. The upgrading unit is constructed to be inserted in an optical fiber line of the PON, i.e. into the main line between the OLT and the first optical splitter within the PON, or in one of the branches. In such a way, the service interruption time during the upgrade is minimized and may take only a few seconds, in order to avoid breaking the service availability limits.

In a highly preferred variant, the method further comprises: recovering the clock of the first discrete-level signal, and generating the clock of the second discrete-level signal by synchronizing the clock of the second discrete-level signal to the recovered clock of the first discrete-level signal. In such a way, the legacy system may serve as the master clock system and the advanced system as the slave clock system.

In another preferred variant, the method further comprises: in an OLT, reserving a time slot for upstream grants of those of the ONTs which are adapted to recover the second discrete-level signal from the multi-speed, multi-level signal, and, in the upgrading unit, attributing upstream grants within the reserved time slot to at least part of the ONTs which are adapted to recover the second discrete-level signal. The reservation of the time slot in the OLT may be performed either directly by the network management or by an upstream signal which requests the granting of a time slot for a specific "dummy" ONT - it being possible to modify the upstream signals in the upgrading unit for this purpose. In any case, a reservation of upstream transmission time for the advanced ONTs will be performed in the OLT, and the attribution of sub-intervals of the reserved time slot to individual ones of the advanced ONTs may be performed in the upgrading unit.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Figs. 1a-c**: schematic diagrams of a first, a second and a third embodiment of an upgrading unit according to the invention,
- **Fig. 2**: a schematic diagram of an embodiment of a PON according to the invention,
- **Fig. 3**: a schematic diagram of a time waveform of a first binary signal provided to an optical input of the upgrading unit and of a dual-speed, multi-level signal provided to an optical output of the upgrading unit, and
- **Fig. 4**: the structure of a downstream transmission frame used for the downstream transmission in the PON of Fig. 2.

### Detailed Description of Preferred Embodiments

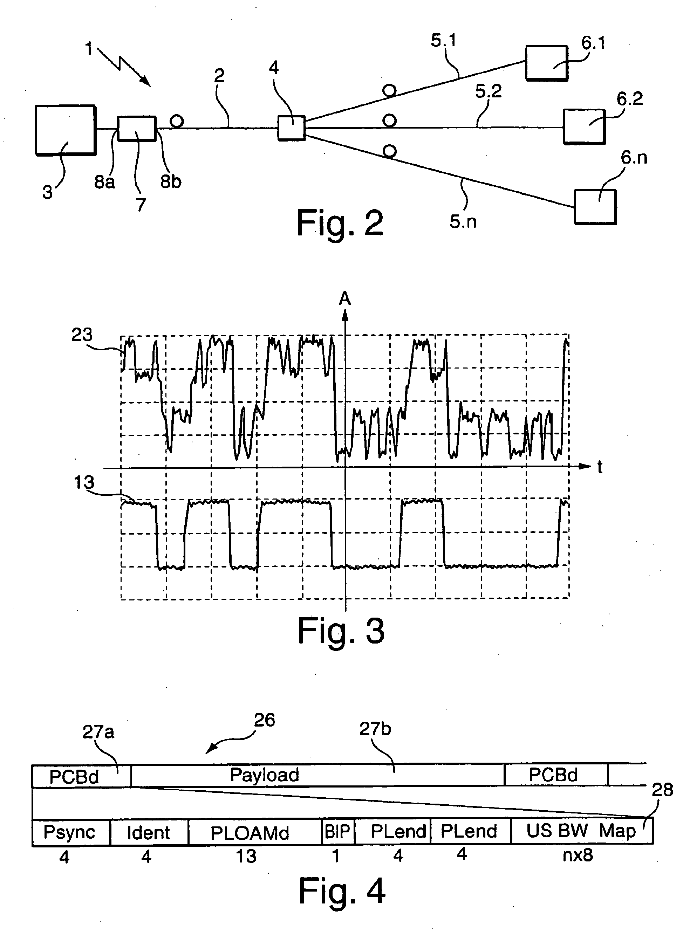

**Fig. 2** shows a passive optical network (PON) **1,** comprising a main fiber line **2** being located between an Optical Line Termination (OLT) **3** and a 1 x N passive optical distribution network (splitter) **4** connecting the main line 2 with a number n of branches, three of which (**5.1, 5.2, 5.n**) are shown in Fig. 2. Optical Network Terminations (ONTs) **6.1, 6.2, 6.n** in the end users' premises are arranged at the end of the branches 5.1, 5.2, 5.n of the PON 1. The person skilled in the art will appreciate that Fig. 2 only represents the basic structure of a PON and that real PONs are usually more complex.

In the PON 1 shown in Fig. 2, the ONTs 6.1 and 6.2 are legacy ONTs, i.e. they are only capable of processing optical signals transmitted in downstream with a first bit-rate of e.g. 2.5 Gbit/s, whereas the ONT 6.n is an advanced ONT which is capable of processing optical signals at a higher bit-rate, e.g. at 10 Gbit/s. In order to serve both the legacy ONTs 6.1, 6.2 and the advanced ONT 6.n, downstream signals must be transmitted from the main line 2 which can be received and processed by both the legacy and advanced ONTs 6.1 to 6.n.

As the OLT 3 of the PON 1 is a legacy OLT, it is only adapted to generate a downstream signal at a bit-rate of 2.5 Gbit/s. For the purpose of also serving the advanced ONT 6.n, an upgrading unit **7** is arranged as an in-line element in the main fiber line 2 of the PON 1, an optical input **8a** of the upgrading unit 7 being connected to a first part of the fiber line 2 leading to the legacy OLT 3, an optical output **8b** of the upgrading unit 7 being connected to the part of the optical fiber line 2 leading to the splitter 4. The person skilled in the art will appreciate that alternatively, the upgrading unit 7 may also be arranged in one of the branches 5.1 to 5.n in case that further splitters (not shown) are present in the PON 1. In such a way, only specific parts of the PON 1 may be upgraded and separate signals may be inserted to different branches.

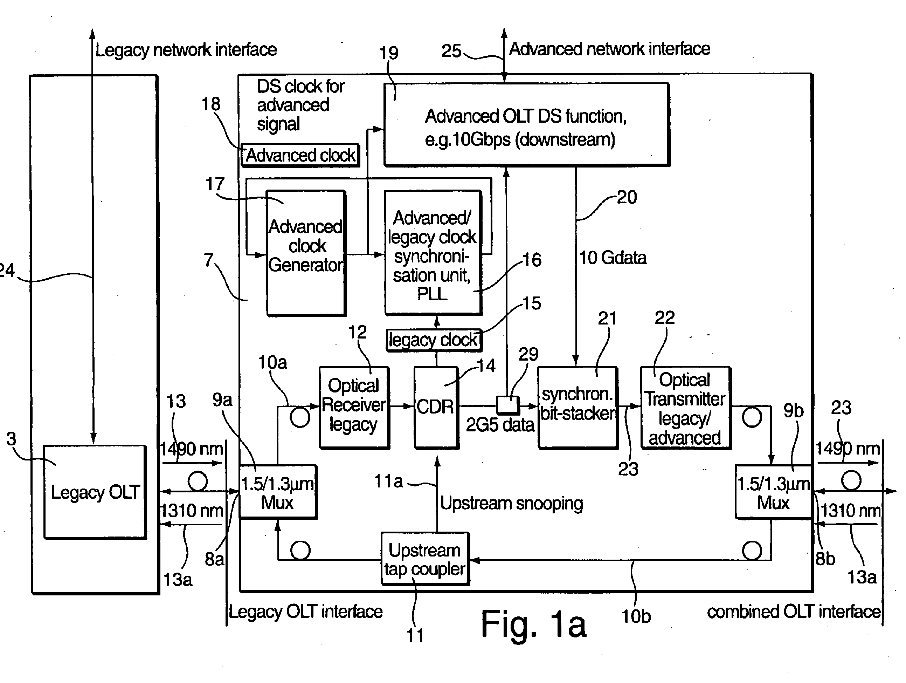

The downstream transmission in the PON 1 is performed at a wavelength of 1490 nm, whereas the upstream transmission is performed at a wavelength of 1310 nm, such that the upstream traffic may be separated from the downstream traffic by using a first and second wavelength-selective coupler **9a, 9b** arranged at the optical input 8a and the optical output 8b of the upgrading unit 7, respectively, the latter being represented in greater detail in **Fig. 1a****.**

The wavelength-selective couplers 9a, 9b are separating the upstream and downstream wavelength window to form a downstream path **10a** and an upstream path **10b,** respectively. Although an optical tap coupler **11** is arranged in the upstream path 10b for tapping a small portion of an upstream signal **13a** for retrieving burst envelope information, the upstream traffic from the ONTs 6.1 to 6.n passes the upstream path 10b unchanged, the upgrading unit 7 being optically transparent for closing the loop of the MAC, such that the legacy OLT 3 may still control the upstream multiple access for both legacy and advanced ONTs 6.1 to 6.n. The tapped signal **11a** may be used in order to give the advanced system access to upstream burst information. The upstream burst information may be used to synchronize the high-speed traffic and the low-speed traffic of the PON 1 by calculating the round trip delay between the upgrading unit 7 and the OLTs 6.1 to 6.n, also taking the processing delay of the upgrading unit 7 into account.

In the downstream signal path 10a, a (legacy speed) optical receiver **12** is arranged for receiving a first, binary downstream signal **13** having a bit-rate of 2.5 Gbit/s from the OLT 3. The optical receiver **12** performs an o/e-conversion of the first binary signal 13 using a photodiode (not shown), the o/e-converted first binary signal 13 being provided to a clock-data recovery unit **14** for gaining access to the downstream data stream. The clock-data recovery unit 14 recovers the legacy clock **15** of the first binary signal 13 having a clock frequency corresponding to the 2.5 Gbit/s bit-rate and provides the legacy clock 15 to a synchronization unit **16** which is arranged in a feedback loop together with a clock generator **17** for generating an advanced clock **18** at a clock frequency being an integer multiple of, for example four times the clock frequency of the legacy clock 15. By providing the legacy clock 15 as an input to the synchronization unit 16 of the phase-locked loop, the legacy clock 15 serves as a master clock for the advanced clock 18, the advanced clock 18 being brought in phase with the legacy clock 15.

The advanced clock 18 is provided to a signal generation unit **19** for generating a second binary signal **20** at the advanced speed of 10 Gbit/s. The second binary signal 20 is then provided from the signal generation unit 19 to a bit-stacking unit **21** which adds the voltage level of the second binary signal 20 to the voltage level of the first binary signal 13 provided from the clock-data recovery unit 14 to form a bit-stacked, dual-speed, multi-level signal **23.** The person skilled in the art will appreciate that for combining the first and second signal 13, 20, an addition is not necessarily required, as other ways of performing a multi-level mapping of the two signals 13, 20 to the bit-stacked signal 23 may be more appropriate, e.g. using a look-up table for the combining.

In any case, an optical transmitter **22** which operates at the advanced speed of 10 Gbit/s converts the dual-speed, multi-level signal 23 from the electrical to the optical domain, the dual-speed, multi-level signal 23 then being provided the optical output 8b of the upgrading unit 7 via the second optical splitter 9b. In such a way, the data of the first downstream signal 13 which has been recovered in the clock data recovery unit 14 is re-modulated with minimum delay on the high speed (general: advanced) transmitter 22 in the same downstream wavelength window.

The time waveform (amplitude) of the dual-speed, multi-level signal 23 at the optical output 8b of the upgrading unit 7 is shown in **Fig. 3** together with the time waveform of the first binary signal 13 with the lower bit rate which is provided to the optical input 8a of the upgrading unit 7. The second binary signal 20 with the higher bit rate may be derived from Fig. 3 by subtracting the first binary signal 13 from the dual-speed, multi-level signal 23. With the dual-speed, multi-level signal 23, concurrent data transmission and recovery using both speeds is possible in suitable constellations.

The data which is to be included into both the first binary signal 13 and the second binary signal 20 is provided to the OLT 3 via a legacy network interface **24** and to the upgrading unit 7 via an advanced network interface **25,** respectively. Typically, the upgrading unit 7 and the OLT 3 both receive payload data to be transmitted in downstream from a network control unit (not shown), the payload data being provided at the lower bit-rate of 2.5 Gbit/s to the OLT 3 and at the bit-rate of 10 Gbit/s to the upgrading unit 7.

Both the OLT 3 and the upgrading unit 7 are composing downstream frames **26** having a structure which is shown in **Fig. 4** for the example of the GPON protocol specification (ITU-T G.984.3). The downstream frame 26 comprises a header **27a,** also referred to as Physical Control Block downstream, PCBd, and a payload segment **27b** which is used for transmitting the encapsulated payload data received from the network interfaces 24, 25, respectively. The header 27a comprises a structure which is referred to as Upstream Bandwidth map **28** which coordinates the time slots when data is sent in upstream through the PON 1. In the Upstream Bandwidth map 28, a plurality of allocation structures (not shown) is provided, each of which assigning a specific (dynamically adoptable) amount of time to a targeted ONT 6.1 to 6.n to send its upstream traffic.

For interleaving the time slots of the upstream grants in the second discrete-level signal 20 with the time slots of the upstream grants in the first discrete-level signal 13, the upgrading unit 7 further comprises a data retrieving unit **29** for retrieving the bandwidth map 28 together with further network management data from the first discrete-level signal 13. The signal from the data retrieving unit 29 is provided to the signal generation unit 19 which is adapted to generate an upstream bandwidth map for the second discrete-level signal 20 taking the upstream bandwidth map 28 of the first discrete-level signal 13 into account, thus allocating upstream grants for the time slots in which the legacy OLTs 6.1, 6.2 do not send upstream signals. Consequently, by reading the upstream bandwidth map 28 from the first binary signal 13, the upstream transmission grant allocation can be easily copied to the advanced speed system if two maps are maintained and concurrent upstream signaling on the legacy wavelength or several advanced wavelengths can be interleaved in time. In such a way, the upgrading unit 7 appears transparent to the legacy operating PON, for both the upstream and downstream directions, and provides a master clock to the advanced PON.

For performing the interleaving, it may be useful to reserve (pre-occupy) a time slot for upstream grants for the advanced ones of the ONTs 6.1 to 6.n in the OLT 3, upstream grants within the reserved time slot being attributed to at least part of the advanced ONTs in the signal generation unit 19 of the upgrading unit 7. The reservation of such a time slot may be performed by the management of the PON 1 via the network interface 24, or an upstream signal received in the OLT 3 may contain a request for an upstream grant to a "dummy" ONT during the time slot to be reserved. The "dummy" ONT may be a physical component arranged at a suitable location of the PON 1, it also being possible that the upgrading unit 7 serves as such a "dummy" ONT by modifying the upstream signals for generating an appropriate request. In either case, the distribution of upstream grants to specific ones of the advanced ONTs 6.1 to 6.n during the reserved time slot may be performed in the upgrading unit 7.

In the upgrading unit 7 of Fig. 1a, the upstream transmission of both the legacy and advanced ONTs 6.1 to 6.n is performed at the first speed, such that the management of the upstream data may be performed by the OLT 3. Alternatively, it is also possible to perform the upstream transmission of the advanced ONTs at the second, higher speed, which will be described in the following for an approach using the same shared upstream wavelength range for both the upstream transmission of the legacy ONTs and of the advanced ONTs.

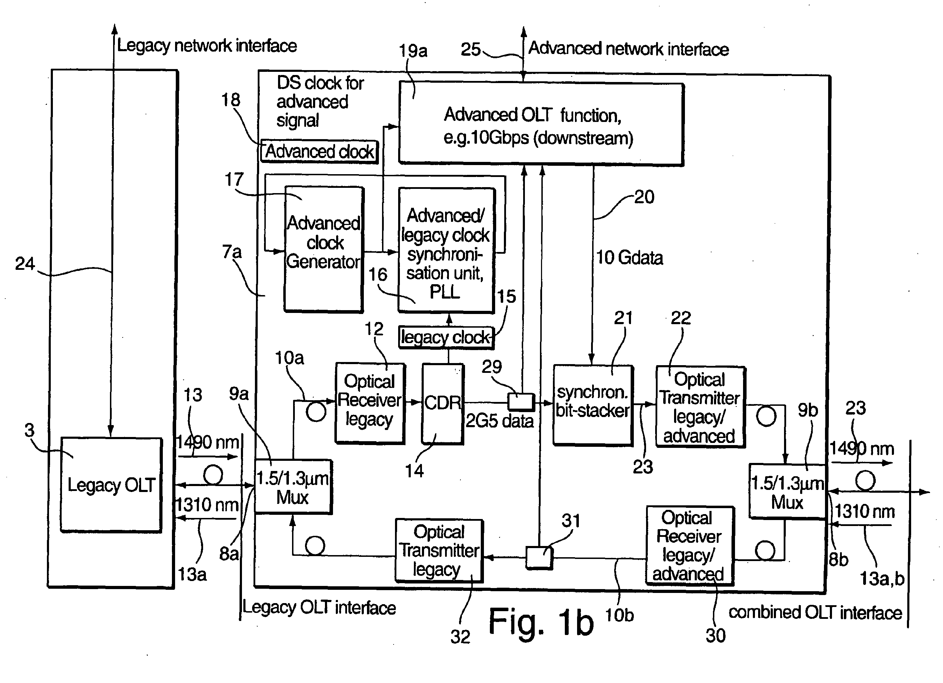

Although the downstream traffic in the PON 1 is transmitted in a continuous mode, time division multiplexing is performed in the upstream direction, so-called bursts containing traffic sent from a specific one of the ONTs 6.1 to 6.n in upstream during pre-defined time slots alternating with gaps in which no upstream traffic is transmitted. As time slots for sending upstream signals are attributed to specific ONTs, in case that advanced ONTs transmit their upstream data at a higher speed as compared to the speed of the upstream data of the legacy ONTs, the upstream transmission time will be divided into first time intervals during which data is transmitted at a higher upstream bit-rate by the advanced ONTs (typically being identical to the higher downstream bit-rate), the first time intervals alternating with second time intervals which are reserved for the transmission of data at a lower upstream bit-rate by the legacy ONTs (typically corresponding to the lower downstream bit-rate). Consequently, signals of different speeds are present only in different time intervals in the upstream direction, such that separating these upstream signals is comparatively easy, as will be explained in the following with respect to **Fig. 1b****,** representing an upgrading unit **7a** which differs from the upgrading unit 7 of Fig. 1a in that the upstream path 10b comprises a further optical receiver **30,** a further data retrieving unit **31,** and a further optical transmitter **32.**

The further optical receiver 30 is adapted to receive both upstream signals 13a at the first speed and upstream signals **13b** at the second speed. The o/e-converted upstream signals 13a, 13b are fed to the further data retrieving unit 31 which provides data contained in the upstream signals 13b to the signal generation unit **19a** serving as a full OLT for the advanced system, as it closes the loop of the MAC of the advanced system, such that the upgrading unit 7a may control the upstream multiple access of the advanced ONTs. Nevertheless, the upstream multiple access of the legacy ONTs will still be controlled by the OLT 3. For this purpose, the data retrieving unit 31 provides only the upstream signals 13a with the first speed to the transmitter 32 for transmitting them to the OLT 3, thus closing the loop of the MAC of the legacy system.

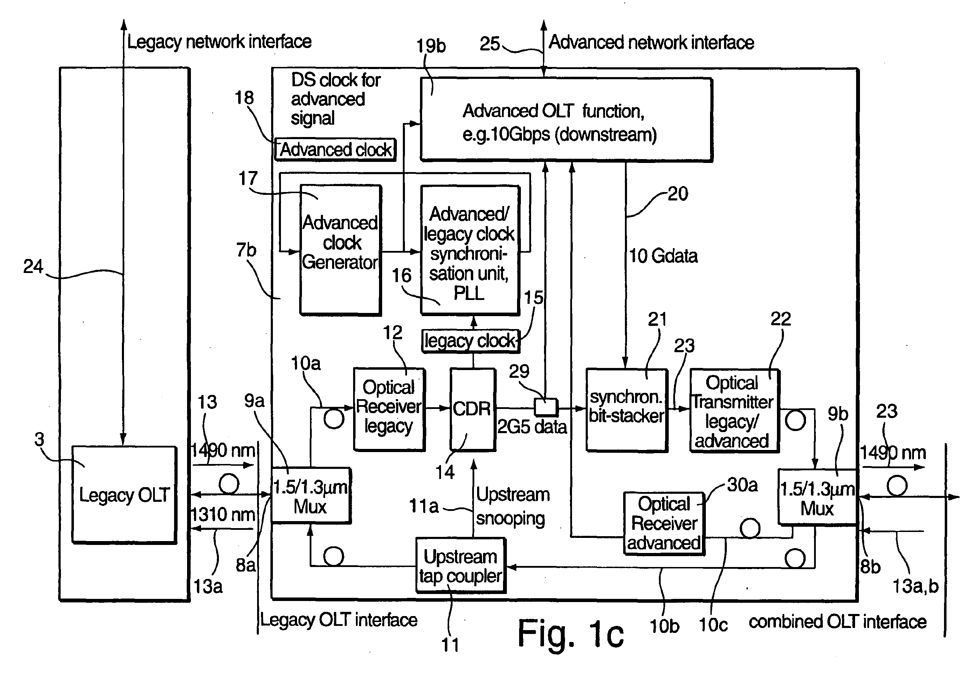

In an alternative approach for performing the upstream transmission of the advanced ONTs at the second, higher speed, their upstream signals 13b are transmitted in an upstream wavelength range which is different from the upstream wavelength range of the upstream signals 13a of the legacy ONTs. In this case, an upgrading unit **7b** shown in **Fig. 1c** may be used which comprises the optically transparent upstream signal path 10b shown in Fig. 1a and in addition, a further upstream signal path **10c** for the further upstream wavelength (not shown) of the upstream signals 13b of the advanced ONTs. The further upstream wavelength may be extracted from the upstream transmission in the PON 1 by the wavelength-selective coupler 9b at the optical output 8b of the upgrading unit 7b, the further upstream signal path 10c being optically terminated in the upgrading unit 7b in an optical receiver 30a which transmits the o/e converted upstream signals 13b of the advanced ONTs to a signal generating unit 19b (serving as a full OLT for the advanced system) for further processing.

The person skilled in the art will appreciate that although in the embodiments described above binary signals have been used, discrete-level signals having more than two levels may be used as well, and that the signal generation unit 19 may be adapted to encode a binary bit stream as a signal with three or more levels. Also, more than one wavelength may be used in the upstream and downstream direction, respectively, the wavelength-selective splitters 9a, 9b being adapted to separate more than two different wavelengths in this case and transfer the first wavelength unrepeatered.

In summary, by inserting an upgrading unit 7 into an optical fiber line of the PON 1, the service interruption time during an upgrade is minimized, such that the service availability limits may be maintained. Moreover, as only a single downstream wavelength is used, no wavelength plan has to be set up and adhered to, and, in particular, no ONT-side optical filtering is required with the present solution. Also, the proposed solution allows the continued use of the legacy OLT and couples the new service to the fiber line without optical filters etc. and without consuming an additional wavelength which would require elevated wavelength stability requirements.

The above description of the preferred embodiments has been given by way of example. From the disclosure given, those skilled in the art will not only understand the present invention and its attendant advantages, but will also find apparent various changes and modifications to the structures and methods disclosed.

## Claims

1. Upgrading unit (7, 7a, 7b) for operating a passive optical network (1), PON, at a higher speed by inserting the upgrading unit (7, 7a, 7b) as an in-line element into a fiber line (2) of the PON, the upgrading unit (7, 7a, 7b) comprising:
a receiver (12) for receiving a first discrete-level signal (13) having a first speed and being provided to an optical input (8a) of the upgrading unit (7, 7a, 7b),
a bit-stacking unit (21) for synchronously combining the first discrete-level signal (13) and a second discrete-level signal (20) having a second, higher speed to form a multi-speed, multi-level signal (23) in the electrical domain, and
an optical transmitter (22) for providing the multi-speed, multi-level signal (23) to an optical output (8b) of the upgrading unit (7, 7a, 7b).

2. Upgrading unit according to claim 1, further comprising:
a clock recovery unit (14) for recovering a clock (15) of the first discrete-level signal (13),
a clock generator (17) for generating a clock (18) of the second discrete-level signal (20), and
a synchronizing unit (16) for synchronizing the clock generator (17) for generating the clock (18) of the second discrete-level signal (20) to the clock (15) of the first discrete-level signal (13).

3. Upgrading unit according to claim 1, further comprising:
two wavelength-selective couplers (9a, 9b) for splitting a signal path between the optical input (8a) and the optical output (8b) into an upstream signal path (10b) and a downstream signal path (10a), of the upgrading unit (7, 7a, 7b) the optical receiver (12), the bit-stacking unit (21) and the optical transmitter (22) being arranged in the downstream signal path (10a).

4. Upgrading unit according to claim 1, further comprising: a signal generation unit (19, 19a, 19b) for generating the second discrete-level signal (20), the signal generation unit (19, 19a, 19b) being preferably connected to a network interface (25) of the upgrading unit (7, 7a, 7b) for receiving data to be included into the second discrete-level signal (20).

5. Upgrading unit according to claim 4, further comprising: a data retrieving unit (29) for retrieving an upstream bandwidth map (28) from the first discrete-level signal (13), the signal generation unit (19, 19a) being adapted to generate an upstream bandwidth map for the second discrete-level signal (20) taking the upstream bandwidth map (28) of the first discrete-level signal (13) into account, preferably by interleaving time slots for upstream grants of the second discrete-level signal (20) with time slots for upstream grants of the first discrete-level signal (13).

6. Upgrading unit according to claim 3, further comprising: a tap coupler (11) in the upstream signal path (10b) for retrieving burst envelope information from upstream signals (13a).

7. Upgrading unit according to claim 3, the upstream signal path (10b) comprising: a receiver (30) for receiving upstream signals (13a, b) from the optical output (8b) at a first speed and at a second, higher speed, a data retrieving unit (31) for retrieving data from the upstream signals (13a, b), and a transmitter (32) for transmitting upstream signals (13a) having the first speed to the optical input (8a).

8. Passive optical network (1), PON, comprising:
an optical line termination (3), OLT, being adapted to generate a first discrete-level optical signal (13),
an optical splitter (4),
a main line (2) arranged between the OLT (3) and the optical splitter (4), a plurality of branches (5.1 to 5.n) connected to the optical splitter (4), and
at least one upgrading unit (7, 7a, 7b) according to claim 1 arranged as an in-line element in the main line (2) or in one of the branches (5.1 to 5.n).

9. Method for operating a passive optical network (1), PON, at a higher speed, the method being **characterised by** :
inserting an upgrading unit (7, 7a, 7b) as an in-line element into a fiber line (2) of the PON (1),
receiving a first discrete-level optical signal (13) having a first speed from an optical input (8a) of the upgrading unit (7, 7a, 7b),
synchronously combining the first discrete-level signal (13) and a second discrete-level signal (20) having a second, higher speed to form a multi-speed, multi-level signal (23) in the electrical domain, and
transmitting the multi-speed, multi-level signal (23) to an optical output (8b) of the upgrading unit (7, 7a, 7b).

10. Method according to claim 9, further comprising:
recovering a clock (15) of the first discrete-level signal (13), and
generating a clock (18) of the second discrete-level signal (20) by synchronizing the clock (18) of the second discrete-level signal (20) to the recovered clock (15) of the first discrete-level signal (13).

11. Method according to claim 9, further comprising:
in an OLT (3), reserving a time slot for upstream grants of those of the ONTs (6.1 to 6.n) which are adapted to recover the second discrete-level signal (20) from the multi-speed, multi-level signal (23), and
in the upgrading unit (7), attributing upstream grants within the reserved time slot to at least part of the ONTs (6.1 to 6.n) which are adapted to recover the second discrete-level signal (20).

## Patentansprüche

1. Aufrüstungseinheit (7, 7a, 7b) zum Betreiben eines passiven optischen Netzwerks (1), PON, bei einer höheren Geschwindigkeit durch Einfügen der Aufrüstungseinheit (7, 7a, 7b) als ein Inline-Element in eine Faserleitung (2) des PON, wobei die Aufrüstungseinheit (7, 7a, 7b) umfasst:
Einen Empfänger (12) zum Empfangen eines ersten Discrete-Level-Signals (13) mit einer ersten Geschwindigkeit, welches an einem optischen Eingang (8a) der Aufrüstungseinheit (7, 7a, 7b) bereitgestellt wird,
eine Bitstapelungseinheit (21) zum synchronen Kombinieren des ersten Discrete-Level-Signals (13) und eines zweiten Discrete-Level-Signals (20) mit einer zweiten, höheren Geschwindigkeit, um ein Multi-Speed-, Multi-Level-Signal (23) im elektrischen Bereich zu bilden, und
einen optischen Sender (22) zum Bereitstellen des Multi-Speed-, Multi-Level-Signals (23) an einen optischen Ausgang (8b) der Aufrüstungseinheit (7, 7a, 7b).

2. Aufrüstungseinheit nach Anspruch 1, weiterhin umfassend:
Eine Taktrückgewinnungseinheit (14) zum Rückgewinnen eines Taktes (15) des ersten Discrete-Level-Signals (13),
einen Taktgenerator (17) zum Erzeugen eines Taktes (18) des zweiten Discrete-Level-Signals (20),
eine Synchronisiereinheit (16) zur Synchronisierung des Taktgenerators (17) zum Erzeugen des Taktes (18) des zweiten Discrete-Level-Signals (20) mit dem Takt (15) des ersten Discrete-Level-Signals (13).

3. Aufrüstungseinheit nach Anspruch 1, weiterhin umfassend:
Zwei wellenlängenselektive Koppler (9a, 9b) zum Aufteilen eines Signalpfads zwischen dem optischen Eingang (8a) und dem optischen Ausgang (8b) in einen Upstream-Signalpfad (10b) und einen Downstream-Signalpfad (10a) der Aufrüstungseinheit (7, 7a, 7b), wobei der optische Empfänger (12), die Bitstapelungseinheit (21) und der optische Sender (22) im Downstream-Signalpfad (10a) angeordnet sind.

4. Aufrüstungseinheit nach Anspruch 1, weiterhin umfassend: Eine Signalerzeugungseinheit (19, 19a, 19b) zum Erzeugen des zweiten Discrete-Level-Signals (20), wobei die Signalerzeugungseinheit (19, 19a, 19b) vorzugsweise an eine Netzwerkschnittstelle (25) der Aufrüstungseinheit (7, 7a, 7b) angeschlossen ist, zum Empfangen von in das zweite Discrete-Level-Signal (20) einzufügenden Daten.

5. Aufrüstungseinheit nach Anspruch 4, weiterhin umfassend: Eine Datenwiedergewinnungseinheit (29) zum Abrufen einer Upstream-Bandbreitenabbildung (28) aus dem ersten Discrete-Level-Signal (13), wobei die Signalerzeugungseinheit (19, 19a) dazu ausgelegt ist, eine Upstream-Bandbreitenabbildung für das zweite Discrete-Level-Signal (20), welche die Upstream-Bandbreitenabbildung (28) des ersten Discrete-Level-Signals (13) berücksichtigt, zu erzeugen, vorzugsweise durch Verschachtelung der Zeitschlitze für Upstream-Bewilligungen des zweiten Discrete-Level-Signals (20) mit Zeitschlitzen für Upstream-Bewilligungen des ersten Discrete-Level-Signals (13).

6. Aufrüstungseinheit nach Anspruch 3, weiterhin umfassend: Einen Taper-Koppler (11) im Upstream-Signalpfad (10b) zum Abrufen von Burst-Umschlagsinformationen aus Upstream-Signalen (13a).

7. Aufrüstungseinheit nach Anspruch 3, wobei der Upstream-Signalpfad (10b) umfasst:
Einen Empfänger (30) zum Empfangen von Upstream-Signalen (13a, b) von dem optischen Ausgang (8b) bei einer ersten Geschwindigkeit und bei einer zweiten, höheren Geschwindigkeit, eine Datenwiedergewinnungseinheit (31) zum Abrufen von Daten aus den Upstream-Signalen (13a, b), und einen Sender (32) zum Senden von Upstream-Signalen (13a) mit der ersten Geschwindigkeit an den optischen Eingang (8a).

8. Passives optisches Netzwerk (1), PON, umfassend:
Einen optischen Leitungsabschluss (3), OLT, welcher dazu ausgelegt ist, ein erstes optisches Discrete-Level-Signal (13) zu erzeugen,
einen optischen Verteiler (4),
eine zwischen dem OLT (3) und dem optischen Verteiler (4) angeordnete Hauptleitung (2),
eine Vielzahl von an den optischen Verteiler (4) angeschlossenen Abzweigungen (5.1 bis 5.n),
und
mindestens eine Aufrüstungseinheit (7, 7a, 7b) nach Anspruch 1, welche als ein Inline-Element in der Hauptleitung (2) oder in einer der Abzweigungen (5.1 bis 5.n) angeordnet ist.

9. Verfahren zum Betreiben eines passiven optischen Netzwerks (1), PON, bei einer höheren Geschwindigkeit, wobei das Verfahren **gekennzeichnet ist durch**:
Einfügen einer Aufrüstungseinheit (7, 7a, 7b) als ein Inline-Element in eine Faserleitung (2) des PON (1),
Empfangen eines ersten optischen Discrete-Level-Signals (13) mit einer ersten Geschwindigkeit von einem optischen Eingang (8a) der Aufrüstungseinheit (7, 7a, 7b),
synchrones Kombinieren des ersten Discrete-Level-Signals (13) und eines zweiten Discrete-Level-Signals (20) mit einer zweiten, höheren Geschwindigkeit, um ein Multi-Speed-, Multi-Level-Signal (23) im elektrischen Bereich zu bilden, und
Übertragen des Multi-Speed-, Multi-Level-Signals (23) an einen optischen Ausgang (8b) der Aufrüstungseinheit (7, 7a, 7b).

10. Verfahren nach Anspruch 9, weiterhin umfassend:
Rückgewinnen eines Taktes (15) des ersten Discrete-Level-Signals (13), und
Erzeugen eines Taktes (18) des zweiten Discrete-Level-Signals (20) durch Synchronisieren des Taktes (18) des zweiten Discrete-Level-Signals (20) mit dem rückgewonnenen Takt (15) des ersten Discrete-Level-Signals (13).

11. Verfahren nach Anspruch 9, weiterhin umfassend:
In einem OLT (3), Reservieren eines Zeitschlitzes für Upstream-Bewilligungen derjenigen der ONTs (6.1 bis 6.n), welche dazu ausgelegt sind, das zweite Discrete-Level-Signal (20) aus dem Multi-Speed-, Multi-Level-Signal (23) rückzugewinnen, und in der Aufrüstungseinheit (7), Erteilen von Upstream-Bewilligungen innerhalb des reservierten Zeitschlitzes an mindestens einen Teil der ONTs (6.1 bis 6.n), welche dazu ausgelegt sind, das zweite Discrete-Level-Signal (20) rückzugewinnen.

## Revendications

1. Unité de mise à niveau (7, 7a, 7b) pour faire fonctionner un réseau optique passif (1), PON, à une vitesse plus élevée en insérant l'unité de mise à niveau (7, 7a, 7b) en tant qu'élément en ligne dans une ligne de fibre (2) du PON, l'unité de mise à niveau (7, 7a, 7b) comprenant :
un récepteur (12) pour recevoir un premier signal de niveau discret (13) ayant une première vitesse et doté d'une entrée optique (8a) de l'unité de mise à niveau (7, 7a, 7b),
une unité d'empilement de bits (21) pour combiner de manière synchrone le premier signal de niveau discret (13) et un second signal de niveau discret (20) ayant une seconde vitesse plus élevée, pour former un signal multi-vitesse, multi-niveau (23) dans le domaine électrique, et
un émetteur optique (22) pour appliquer le signal multi-vitesse, multi-niveau (23) sur une sortie optique (8b) de l'unité de mise à niveau (7, 7a, 7b).

2. Unité de mise à niveau selon la revendication 1, comprenant en outre :
une unité de récupération d'horloge (14) pour récupérer une horloge (15) du premier signal de niveau discret (13),
un générateur d'horloge (17) pour générer une horloge (18) du second signal de niveau discret (20),
une unité de synchronisation (16) pour synchroniser le générateur d'horloge (17) pour générer l'horloge (18) du second signal de niveau discret (20) sur l'horloge (15) du premier signal de niveau discret (13).

3. Unité de mise à niveau selon la revendication 1, comprenant en outre :
deux coupleurs à sélection de longueurs d'onde (9a, 9b) pour diviser un chemin de signal entre l'entrée optique (8a) et la sortie optique (8b) en un chemin de signal amont (10b) et un chemin de signal aval (10a) de l'unité de mise à niveau (7, 7a, 7b), le récepteur optique (12), l'unité d'empilement de bits (21) et l'émetteur optique (22) étant disposés dans le chemin de signal aval (10a).

4. Unité de mise à niveau selon la revendication 1, comprenant en outre : une unité de génération de signal (19, 19a, 19b) pour générer le second signal de niveau discret (20), l'unité de génération de signal (19, 19a, 19b) étant de préférence connectée à une interface de réseau (25) de l'unité de mise à niveau (7, 7a, 7b) pour recevoir des données à inclure dans le second signal de niveau discret (20).

5. Unité de mise à niveau selon la revendication 4, comprenant en outre : une unité d'extraction de données (29) pour extraire une application de bande passante (28) depuis le premier signal de niveau discret (13), l'unité de génération de signal (19, 19a) étant adaptée pour générer une application de bande passante amont pour le second signal de niveau discret (20) en tenant compte de l'application de bande passante amont (28) du premier signal de niveau discret (13), de préférence par entrelaçage des intervalles temporels pour des autorisations amont du second signal de niveau discret (20) avec des intervalles temporels pour des autorisations amont du premier signal de niveau discret (13).

6. Unité de mise à niveau selon la revendication 3, comprenant en outre : un coupleur de dérivation (11) dans le chemin de signal amont (10b) pour extraire des informations d'enveloppe de rafale des signaux amont (13a).

7. Unité de mise à niveau selon la revendication 3, le chemin de signal amont (10b) comprenant : un récepteur (30) pour recevoir les signaux amont (13a, b) de la sortie optique (8b) à une première vitesse et à une seconde vitesse plus élevée, une unité d'extraction de données (31) pour extraire les données des signaux amont (13a, b) et un émetteur (32) pour émettre les signaux amont (13a) ayant la première vitesse à l'entrée optique (8a).

8. Réseau optique passif (1), PON, comprenant :
une extrémité de ligne optique (3), OLT, adaptée pour générer un premier signal optique de niveau discret,
un diviseur optique (4),
une ligne principale (2) disposée entre l'OLT (3) et le diviseur optique (4),
une pluralité de branches (5.1 à 5.n) connectées au diviseur optique (4),
et
au moins une unité de mise à niveau (7, 7a, 7b) selon la revendication 1, disposée en tant qu'élément en ligne dans la ligne principale (2) ou l'une des branches (5.1 à 5.n).

9. Procédé de fonctionnement d'un réseau optique passif (1), PON, à une vitesse plus élevée, le procédé étant **caractérisé par** :
l'insertion d'une unité de mise à niveau (7, 7a, 7b) en tant qu'élément en ligne dans
une ligne de fibre (2) du PON (1),
la réception d'un premier signal de niveau discret (13) ayant une première vitesse
depuis une entrée optique (8a) de l'unité de mise à niveau (7, 7a, 7b),
la combinaison synchrone du premier signal de niveau discret (13) et d'un second
signal de niveau discret (20) ayant une seconde vitesse plus élevée, pour former un
signal multi-vitesse, multi-niveau (23) dans le domaine électrique, et
la transmission du signal multi-vitesse, multi-niveau (23) sur une sortie optique (8b) de l'unité de mise à niveau (7, 7a, 7b).

10. Procédé selon la revendication 9, comprenant en outre :
la réception d'une horloge (15) du premier signal de niveau discret (13), et
la génération d'une horloge (18) du second signal de niveau discret (20) en synchronisant l'horloge (15) du second signal de niveau discret (20) avec l'horloge récupérée (15) du premier signal de niveau discret (13).

11. Procédé selon la revendication 9, comprenant en outre :
dans une OLT (3), la réservation d'un intervalle temporel pour des autorisations amont de ceux des ONT (6.1 à 6.n) qui sont adaptés pour récupérer le second signal de niveau discret (20) du signal multi-vitesse, multi-niveau (23) et dans l'unité de mise à niveau (7), l'attribution d'autorisations amont dans l'intervalle temporel réservé à au moins une partie des ONT (6.1 à 6.n) qui sont adaptés pour récupérer le second signal de niveau discret (20).
